# EUROPEAN PATENT APPLICATION

(11) **EP 2 713 192 A1**
(43) Date of publication of application: **02.04.2014**
(21) Application number: 12813249.5
(22) Date of filing: 10.08.2012
(51) Int. Cl.: G02B 6/38, G02B 6/36

(54) **HIGH-PERFORMANCE OPTICAL-FIBER FAST TERMINATION COMPONENT**

(30) Priority: 26.07.2012 CN 201220365036 U
(71) Applicant: Chaozhou Three-Circle (Group) Co., Ltd., Chaozhou, Guangdong 515646 (CN); Nanchong Three-Circle Electronics Co., Ltd., Nachong, Sichuan 637100 (CN)
(72) Inventor: The designation of the inventor has not yet been filed
(74) Representative: Bergmeier, Werner
(86) International application number: PCT/CN2012/079931
(87) International publication number: WO 2014/015542

(57) **Abstract**

The present invention is related to the field of optical fiber terminal, and more particularly, to a high performance quick terminal assembly. The high performance quick terminal assembly comprises a first ferrule and a second ferrule connected as a whole by a connecting element, the first ferrule and the second ferrule are respectively provided with an inner bore. A gap is provided in the middle of the second ferrule to expose the inner bore, forming a connecting platform for connection of pre-embedded optical fiber and connecting optical fiber. A pressing device is provided at the connecting platform to compress the connecting point of the pre-embedded optical fiber and the connecting optical fiber. In the present invention, the first ferrule and the second ferrule are common ceramic ferrules. By combination of the first ferrule and the second ferrule, it replaces the conventional ceramic ferrule. Consequently, excellent optical performance and high reliability are achieved, and the production costs are largely reduced and versatility is improved.

## Description

### FIELD OF THE INVENTION

The present invention is related to the optical fiber terminal technology, more particularly to a high performance quick terminal assembly for optical fiber.

### BACKGROUND OF THE INVENTION

At present, along with the rapid development of optical fiber communication technology, PON access technology has become a main solution for FTTH. However, with respect to the installation work in the final 1 kilometer, conventional fiber welding technology cannot be promoted in a larger area due to the high costs and limited space and professional training has to be provided. Consequently, the optical fiber terminal technology has become the best solution for FTTH access because of its convenience, efficiency and effectiveness.

The current quick terminal assemblies are generally straight-way type (i.e. straight insert or dry type) or pre-embedded style. Straight-way type quick terminal assemblies have no stable performance due to the limitation of the prior art. They cannot meet the requirements of FTTH. Generally, as to pre-embedded quick terminal assemblies, one end of the fiber and the ceramic ferrule are polished to be an end for connection of common connectors. The other end of the fiber is exposed with a certain length. The exposed part is mounted in a V-shaped groove, which is provided with a block to fix the connection between the access optical fiber and the pre-embedded optical fiber. During the connection, the gel is pre-disposed in the V-shaped groove and fiber locking device is provided. In the construction site, the optical fiber is connected with the pre-embedded optical fiber via the V-shaped groove after being cut. In the pre-embedded quick terminal assemblies, one end of the pre-embedded optical fiber is exposed out of the ferrule, so that it can be broken. Additionally, the V-shaped groove is difficult to be made and it not accurately enough in batch production. The connecting optical fiber cannot be connected coaxially. The successful rate is low in site assembly and 10% optical fiber needs to be assembled twice. With respect to another type of pre-embedded quick terminal assemblies, as shown in Chinese application 201110345399.3, A High Performance Quick Terminal Assembly for Optical Fiber, the pre-embedded optical fiber and the connecting optical fiber are connected in the inner bore of the connecting platform. The high precision inner bores of the ceramic ferrule are connected to replace the plastic V-shaped groove. The pre-embedded optical fiber is protected by the inner bore of the ferrule. Excellent optical performance and high reliability are achieved in this solution, but the ceramic ferrules of the pre-embedded quick terminal assemblies need to be specially made with high costs and less universality.

### SUMMARY OF THE INVENTION

In view of the above-mentioned problems, it is one objective of the present invention to overcome the disadvantages of the prior art by providing a universal and high performance quick terminal assembly for optical fiber, which can be easily mounted and enables the pre-embedded optical fiber to be efficiently connected with the accessing fiber.

To achieve the above objective, solutions are as follows:
A high performance quick terminal assembly for optical fiber, comprising a first ferrule and a second ferrule integrated as a whole by a connecting element, wherein the first ferrule and the second ferrule are both provided with an inner bore; a notch/gap is provided in the middle part of the second ferrule to expose the inner bore, forming a connecting platform at the gap for connection of pre-embedded optical fiber and connecting optical fiber, and a pressing device is disposed at the connecting platform to compress the fiber connecting point of the pre-embedded optical fiber and the connecting optical fiber. The first ferrule and the second ferrule as used in the present invention are common ceramic ferrules. By combination of the first ferrule and the second ferrule, it replace the conventional ceramic ferrules which require special process for manufacture, and thus is cost saving. In addition, excellent optical performance and high reliability are achieved. The connecting platform is in the middle part of the second ferrule, allowing the pressing device to be placed in this area and position restricted by the two ends of the second ferrule. The first ferrule and the second ferrule are connected by the connecting element, to prevent movement of the pressing device and ensure that the pre-embedded optical fiber is not exposed after connection.

Preferably, the pressing device includes a pressing block disposed at the connecting platform and a fastener disposed on the pressing block to fix the pressing block.

Preferably, the center of the block is hollow so as to ensure that the optical fibers on the connecting platform can be fully compressed and accurately connected, preventing the problem of unsatisfactory compression that is due to the rough of the lower surface of the block, or the surface of the connecting platform.

Preferably, the fastener is a tightening sheath.

Preferably, the accessing end of both the first ferrule and the second ferrule are respectively disposed with an optical fiber import hole. Specifically, the optical fiber import hole can be a V-shaped hole, which enables the optical fiber to easily pass into the inner bore of the connecting platform and meanwhile protect the fiber's end surface from being damaged.

Preferably, the end surface of the first ferrule and one end of the pre-embedded optical fiber corresponding to the end surface are polished to be an end that can be matched to the conventional connectors.

Preferably, the connecting element is a shrink-ring.

Preferably, the connecting end of the pre-embedded optical fiber is predisposed with matching gel for the optical fiber.

Advantages of the present invention are summarized below compared with the prior art:
1. The first ferrule and the second ferrule as used in the present invention can simply be common ceramic ferrules. By combination of the first ferrule and the second ferrule, it replace conventional ceramic ferrule which require special manufacturing. Excellent optical performance and high reliability are achieved in the present invention, and at the same time the production costs are largely reduced and versatility is improved.
2. In this present invention, the pre-embedded optical fiber and the connecting optical fiber are connected in the inner bore of the connecting platform so as to prevent the pre-embedded optical fiber from being damaged after being exposed.
3. The connecting platform is in the middle of the second ferrule to allow the pressing device to be positioned in this area, and position restricted by the two ends of the second ferrule. The first ferrule and the second ferrule are connected by the connecting element to prevent movement of the pressing device and ensure that the pre-embedded optical fiber is not exposed after connection.
4. The block is hollow in the center so as to ensure that the optical fibers are completely pressed and can be properly connected.
5. The connecting end surface of the pre-embedded optical fiber is predisposed with enough matching gel, which can be complemented after multi-times of connection or long-term usage.

### BRIEF DESCRIPTION OF THE DRAWINGS

- **FIG. 1**: is a schematic diagram of the pre-embedded optical fiber within the ferrule of the processed quick terminal assembly;
- **FIG. 2**: is a schematic diagram of the pressing block compressing the connected fibers on the connecting platform of the ferrule, after the fibers are connected ; and
- **FIG. 3**: is an enlarged view of part A of FIG. 2;

In the drawings:
1: first ferrule;
2: second ferrule;
3: connecting element;
4: fastener;
5: connecting point;
6: pressing block;
7: connecting optical fiber;
8: connecting platform;
9: pre-embedded optical fiber
10: optical fiber import hole

### DETAILED DESCRIPTION OF THE EMBODIMENTS

The present invention is described in further detail below with reference to the drawings and embodiments.

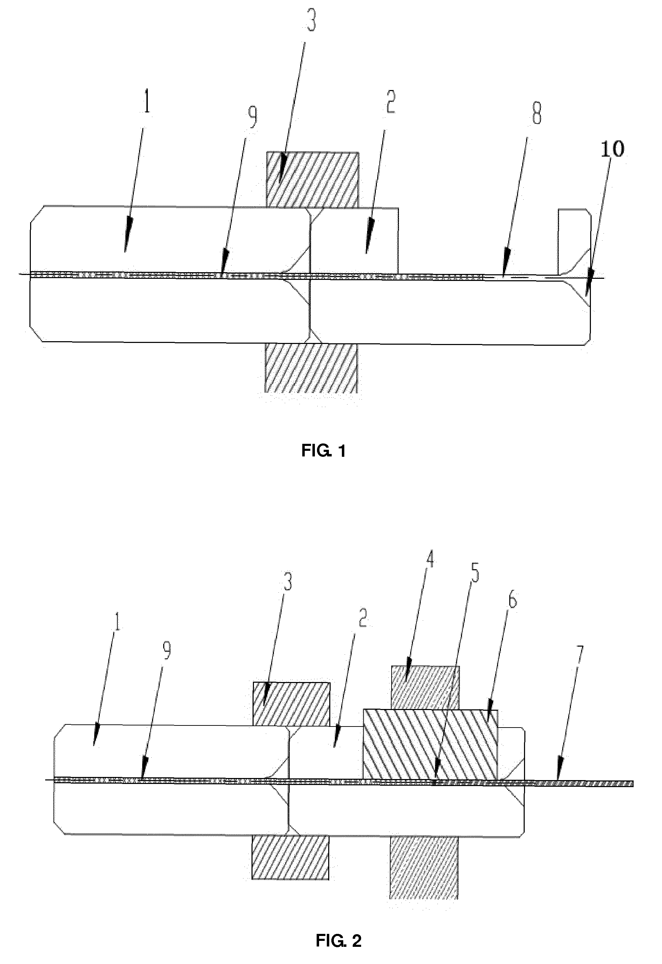

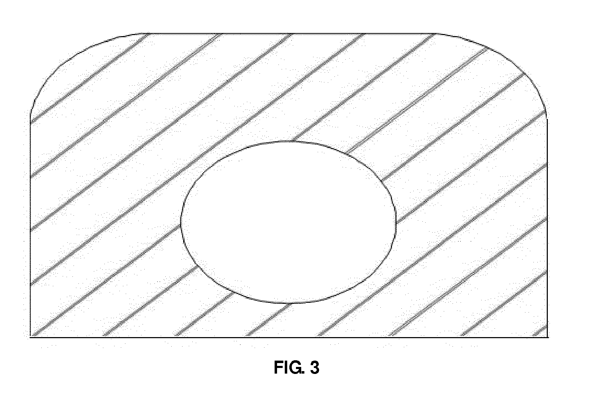

As shown in FIGS. 1-3, a high performance quick terminal assembly for optical fiber provided by the present invention comprises a first ferrule 1 and a second ferrule 2 that are connected as a whole by a connecting element 3; the first ferrule 1 and the second ferrule 2 are respectively provided with an inner bore; a gap is provided in the middle of the second ferrule 2 to exposed the inner bore, forming a connecting platform 8 for the connection of pre-embedded optical fiber 9 and connecting optical fiber 7; and a pressing device is disposed at the connecting platform 8 to compress the connecting point 5 of the pre-embedded optical fiber 9 and the connecting optical fiber 7. The pressing device includes a pressing block 6 disposed at the connecting platform and a fastener 4 disposed on the pressing block to fix the pressing block. The pressing block 6 that is hollow in the center, presses against the connecting point 5, so as to ensure that the optical fibers connected on the connecting platform 8 can be fully compressed and accurately connected, preventing the problem of unsatisfactory compression that is due to the rough of the lower surface of the block, or the surface of the connecting platform. The fastener 4 is a tightening sheath.

The first ferrule and the second ferrule are common ceramic ferrules. They can be processed by polishing and grinding the moulds that are made by extrusion process or injection molding process. Their shapes can be modified by grinder cutter or etching process.

The accessing end of both the first ferrule 1 and the second ferrule 2 are respectively provided with an optical fiber import hole 10. The pre-embedded optical fiber 9 is provided in the inner bores of the first ferrule 1 and the second ferrule 2, from the accessing end. One end of the pre-embedded optical fiber 9 and the corresponding end surface of the first ferrule 1 are polished to be an end matched to conventional connectors. The other end of the pre-embedded optical fiber 9 is ensured clean and even. The connecting end of the pre-embedded optical fiber 9, which is provided with matching gel for the optical fiber, is disposed at the connecting platform 8. The connecting optical fiber 7 enters into the connecting platform 8 via the optical fiber import hole 10 of the second ferrule 2, to connect with the pre-embedded optical fiber 9. The pressing block 6 and the connecting platform 8 of the second ferrule 2 are closed together under the effect of the fastener 4. The block 6 are positioning restricted by the two ends of the second ferrule 2. The connecting optical fiber 7 and the pre-embedded optical fiber 9 are connected coaxially in the inner bores of the connecting platform 8.

## Claims

1. A high performance quick terminal assembly for optical fibers, **characterized in that**, the quick terminal assembly comprises:
a first ferrule and a second ferrule that are connected as a whole by a connecting element;
the first ferrule and the second ferrule are respectively provided with an inner bore;
a gap is disposed in the middle part of the second ferrule to expose the inner bore, forming a connecting platform at the gap for connection of the pre-embedded optical fiber and the connecting optical fiber; and
a pressing device is disposed at the connecting platform to compress the connecting point of the pre-embedded optical fiber and the connecting optical fiber.

2. The high performance quick terminal assembly for optical fiber according to claim 1, **characterized in that** the pressing device includes a pressing block disposed at the connecting platform and a fastener disposed on the pressing block to fix the pressing block.

3. The high performance quick terminal assembly for optical fiber according to claim 2, **characterized in that** the fastener is a tightening sheath.

4. The high performance quick terminal assembly for optical fiber according to claim 2, **characterized in that** the center of the block is hollow.

5. The high performance quick terminal assembly for optical fiber according to claim 1, **characterized in that** the accessing points of both the first ferrule and the second ferrule are respectively provided with an optical fiber import hole.

6. The high performance quick terminal assembly for optical fiber according to claim 1, **characterized in that** the end surface of the first ferrule and the end of the pre-embedded optical fiber corresponding to the said end surface are polished to be matched to conventional connectors.

7. The high performance quick terminal assembly for optical fiber according to claim 1, **characterized in that** the connecting element is a shrink-ring.

8. The high performance quick terminal assembly for optical fiber according to claim 1, **characterized in that** the connecting end of the pre-embedded optical fiber is provided with gel for the optical fiber.
